# EUROPÄISCHE PATENTSCHRIFT

(11) **EP 0 847 601 B1**
(45) Veröffentlichungstag und Bekanntmachung des Hinweises auf die Patenterteilung: **26.01.2000**
(21) Anmeldenummer: 96934372.2
(22) Anmeldetag: 22.08.1996
(51) Int. Cl.: H01M 8/04

(54) **BRENNSTOFFZELLE MIT ENTWÄSSERUNGSSYSTEM**
FUEL CELL WITH WATER-REMOVAL SYSTEM
PILE A COMBUSTIBLE AVEC SYSTEME DE RETRAIT DE L'EAU

(30) Priorität: 30.08.1995 DE 19531852
(43) Veröffentlichungstag der Anmeldung: 17.06.1998
(73) Patentinhaber: FORSCHUNGSZENTRUM JÜLICH GMBH, 52425 Jülich (DE)
(72) Erfinder: MERGEL, Jürgen, D-52428 Jülich (DE); WILHELM, Helmut, D-52134 Herzogenrath (DE)
(86) Internationale Anmeldenummer: DE9601571
(87) Internationale Veröffentlichungsnummer: WO9708767

(56) Entgegenhaltungen:
- EP-A- 0 596 366
- FR-A- 1 462 920
- GB-A- 1 150 282
- GB-A- 1 471 323
- US-A- 3 002 039
- US-A- 5 366 818
- PATENT ABSTRACTS OF JAPAN vol. 010, no. 317 (E-449), 28.Oktober 1986 & JP,A,61 128473 (HITACHI LTD), 16.Juni 1986,
- PATENT ABSTRACTS OF JAPAN vol. 017, no. 050 (E-1314), 29.Januar 1993 & JP,A,04 264365 (FUJI ELECTRIC CO LTD), 21.September 1992,
- PATENT ABSTRACTS OF JAPAN vol. 007, no. 045 (E-160), 23.Februar 1983 & JP,A,57 196479 (NISSAN JIDOSHA KK), 2.Dezember 1982,
- PROCEEDINGS OF THE INTERSOCIETY ENERGY CONVERSION ENGINEERING CONFERENCE. (IECEC), WASHINGTON, AUG. 6 - 11, 1989, Bd. 3, 6.August 1989, JACKSON W D;HULL D A, Seiten 1587-1591, XP000078910 LAWRANCE R J ET AL: "PROTON EXCHANGE MEMBRANE FUEL CELL DEVELOPMENT"

## Beschreibung

Die Erfindung bezieht sich auf eine PEM-Brennstoffzelle mit einem Entwässerungssystem.

Eine Brennstoffzelle mit Entwässerungssystem ist aus der Offenlegungsschrift DE 3907819 Al und der Veröffentlichung "Pem (polymer-electrolyte-membrane) Fuel Cells for Passive Operation, O. Adlhart" bekannt. Es handelt sich hierbei um eine PEM-Brennstoffzelle im "dead end"-Betrieb mit einer internen Befeuchtung und einem speziellen Entwässerungssystem.

Das Produktwasser, also Wasser oder Wasserdampf, wird auf der Kathodenseite der Brennstoffzelle im Blockbetrieb über ein Dochtsystem zu einer Gas/Wasser-Separationsmembran geleitet (Stofftransport). Diese Gas/Wasser-Separationsmembran steht unter Sauerstoffdruck und läßt nur das Produktwasser passieren.

Die bekannte Vorrichtung weist den Nachteil auf, daß durch Verunreinigungen der einzelnen Brennstoffzellenkomponenten sich die Poren zusetzen können und somit die Entwässerung des jeweiligen Zellenblocks verhindert wird. Dies führt zu einer Abnahme der Leistungsfähigkeit der Brennstoffzelle durch verminderten Stofftransport. Ein weiterer Nachteil ist die Verwendung eines Dochtsystems, der den Austausch einzelner Brennstoffzellen sehr aufwendig macht.

Aus DE 40 27 655 C1 ist eine Brennstoffzelle bekannt, bei der Wasserstoff und Sauerstoff im Kreislauf geführt wird. In jedem Kreislauf befindet sich u. a. ein Befeuchter, der das Gas vor Eintritt in die Zelle auf den erforderlichen Wassergehalt einstellt.

Auf der Kathodenseite ist nach der Zelle ein Wasserabscheider vorgesehen, der das angefallene Reaktions- und Transferwasser aufnimmt. Während des Betriebes kann das im Wasserabscheider aufgefangene Produktwasser über einen Hahn abgelassen werden.

Bei dieser bekannten Vorrichtung führt der Einsatz eines Wasserabscheiders, durch den das Gas geleitet wird, nicht zu Gasverlusten, da diese im Kreislauf geführt werden. Die Kreislaufführung erfordert jedoch im Unterschied zum "dead-end"-Betrieb eine externe Befeuchtung.

Eine Brennstoffzellenkühlsystem mit geregelter Wasserausschleusung über ein Ventil ist JP,A,61 128 473 bekannt. Das Ventil dient ebenfalls zur Entgasung des Wasserkreislaufs. Im wesentlichen gleichartige Vorrichtungen sind auch aus den Druckschriften GB, A, 1 471 323, JP, A, 04 264 365, JP, A, 57 196 479 oder US, A, 3 002 039 bekannt.

Aufgabe der Erfindung ist die Schaffung einer PEM-Brennstoffzelle, bei der einerseits auf einfache Weise das Problem bezüglich des entstehenden Produktwassers gelöst wird und bei der andererseits eine externe Befeuchtung entbehrlich ist.

Die Aufgabe wird durch eine PEM-Brennstoffzelle mit den Merkmalen des Hauptanspruchs gelöst. Vorteilhafte Ausgestaltungen ergeben sich aus den Unteransprüchen.

Das Wasser oder der wasserhaltige Dampf wird in einen Wasserabscheider geleitet und kondensiert dort. Hierdurch wird der Einsatz eines aufwendigen Dochtsystems vermieden.

Als Mittel zum Transport des Wassers oder des wasserhaltigen Dampfes kann eine Rohrverbindung, eine Pumpvorrichtung oder vorteilhafter im einfachsten Fall eine Bohrung zur Wasser- oder Wasserdampfableitung dienen.

Der Wasserabscheider weist eine Regeleinrichtung in Form eines Ventils (7) auf, das eine automatische Entleerung des Wasserabscheiders (2) bewirkt. Es kann ein kommerziell erhältlicher Wasserabscheider mit Schwimmerventil eingesetzt werden, das sich öffnet, sobald eine genügende Menge an Kondensat(-wasser) auftritt.

Bei dem Wasser- oder Wasserdampftransport kommt es zu einem Sauerstoffaustritt. Daher ist ferner eine Regeleinrichtung zur Regelung des Wasser- oder Wasserdampfaustritts vorgesehen. Diese kann sich sowohl vor als auch nach dem Wasserabscheider befinden. Hierbei hat sich der Einsatz eines preiswerten Nadelventils als vorteilhaft erwiesen, das automatisiert werden kann und einen regulierten Wasser- oder Wasserdampf/Gasausstrom ermöglicht. Der Verlust an Sauerstoff kann so minimiert werden.

Es hat sich gezeigt, daß der Sauerstoffverlust durch die automatisierte Regulierung vernachlässigbar klein ist. Bei der Zelle ist daher praktisch ein "dead-end"-Betrieb möglich, so daß eine externe Befeuchtung entbehrlich ist.

Ausführungsbeispiel:
- Figur 1: zeigt eine PEM-Brennstoffzelle 1 mit Entwässerungssystem.
- Figur 2: zeigt einen Wasserabscheider 2 mit automatischer Wasser/Kondensatentleerung.

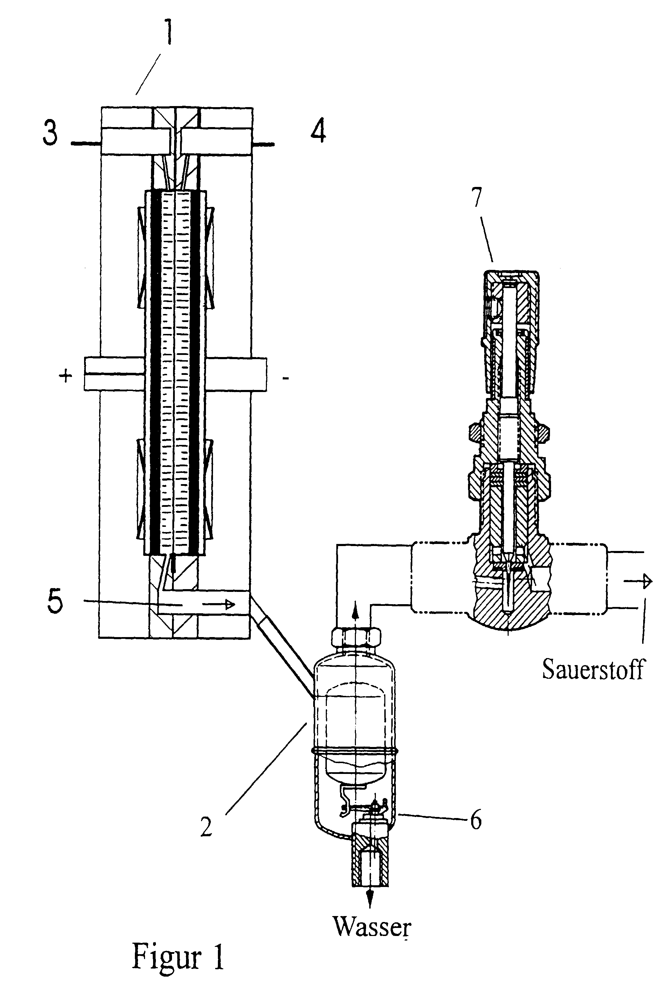

Figur 1 zeigt eine PEM-Brennstoffzelle 1 mit einem Wasserabscheider 2 als Entwässerungssystem. Im oberen Teil der Brennstoffzelle 1 finden sich die Zuleitungen für Sauerstoff 3 und für Wasserstoff 4. Das als Produkt der Verbrennung dieser Gase entstehende Wasser wird über eine Bohrung 5 aus der Brennstoffzelle 1 abgeleitet. Die Ableitung des Wassers oder des Wasserdampfes erfolgt mittels eines Gas(O₂)-Ausstroms. Am Ausgang der Bohrung 5 ist der Wasserabscheider 2 montiert. Hierin wird das Wasser gesammelt. Der Wasserabscheider 2 wird über ein Schwimmerventil 6 automatisch entleert. Der Wasserabscheider 2 ist mit einem Nadelventil 7 verbunden. Mit diesem Nadelventil 7 kann der Gas(O₂)-Ausstrom eingestellt werden.

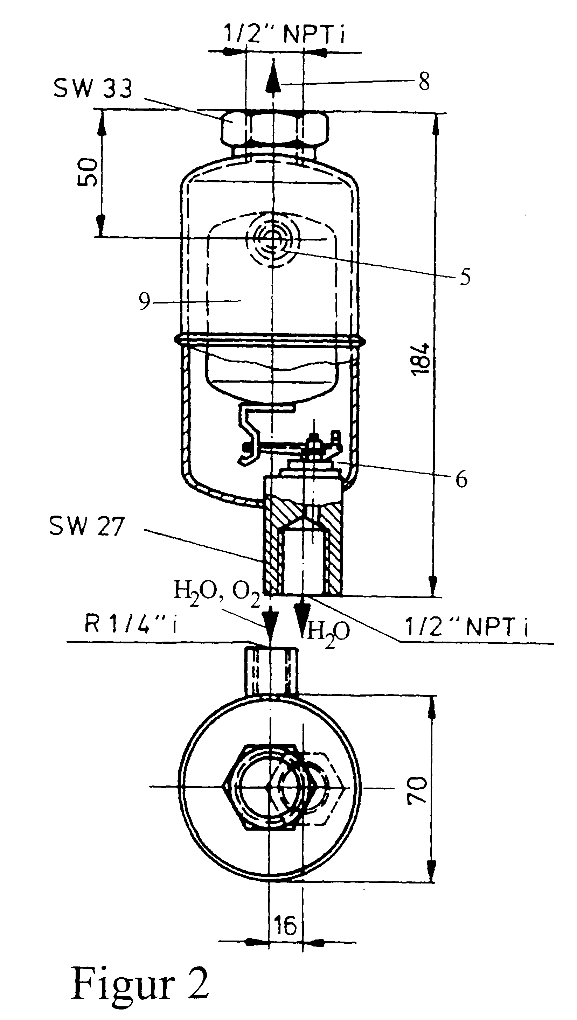

Figur 2 zeigt den Wasserabscheider 2 mit automatischer Kondensat(wasser)entleerung. Hierbei stellt die Bohrung 5 die Zuleitung des Wassers oder des Wasserdampfes in den Wasserabscheider 2 dar. Die Ableitung 8 des Gas(O₂)-Ausstroms befindet sich im oberen Teil des Wasserabscheiders 2. Das Schwimmerventil 6 öffnet sich automatisch, sobald ein Schwimmer 9 durch eine genügende Menge an (Kondensat-)wasser hochgedrückt wird.

## Patentansprüche

1. PEM-Brennstoffzelle vom Typ "dead-end" mit den Merkmalen:
a)Mittel zur Zuführung des in der PEM-Brennstoffzelle entstehenden Produktwassers oder Produktwasserdampfes zu einem Entwässerungssystem sind vorgesehen,
b)das Entwässerungssystem umfaßt einen Wasserabscheider (2),
c)der Wasserabscheider verfügt über eine Regeleinrichtung in Form eines Ventils (6), das die automatische Entleerung des Wasserabscheiders (2) bewirkt,
d)eine Einrichtung (7) zur Regelung des Wasser- oder Wasserdampfaustritts aus der Brennstoffzelle ist kathodenseitig vorgesehen.

2. PEM-Brennstoffzelle nach Anspruch 1,
dadurch gekennzeichnet, daß
eine Bohrung als Zuführung (5) des Produktwassers zum Wasserabscheider (2) vorgesehen ist.

3. PEM-Brennstoffzelle nach Anspruch 1 oder 2,
dadurch gekennzeichnet, daß
das die Regeleinrichtung für die Entleerung bildende Ventil ein Schwimmerventil (6) ist.

4. PEM-Brennstoffzelle nach einem oder mehreren der vorhergehenden Ansprüche,
dadurch gekennzeichnet, daß
die Einrichtung zur Regelung des Gas-Ausstromes aus dem Wasserabscheider (2) aus einem Nadelventil (7) besteht.

## Claims

1. "Dead-end" type pem (polymer-electrolyte-membrane) fuel cell having the following features:
a) means are provided for feeding the product water or product steam arising in the pem fuel cell to a water-removal system,
b) the water-removal system includes a water separator (2),
c) the water separator has a controller in the form of a valve (6) which causes the water separator (2) to be emptied automatically,
d) a device (7) for controlling the escape of water or steam from the fuel cell is provided on the cathode side.

2. Pem fuel cell according to claim 1,
characterised by the provision of a bore as a feeder (5) for the product water to the water separator (2).

3. Pem fuel cell according to claim 1 or 2,
characterised in that the valve constituting the controller for the emptying operation is a float valve (6).

4. Pem fuel cell according to one or more of the preceding claims,
characterised in that the device for controlling the outflow of gas from the water separator (2) consists of a needle valve (7).

## Revendications

1. Pile à combustible PEM du type "dead-end" ayant les caractéristiques suivantes :
a) il est prévu des moyens pour envoyer l'eau produite ou la vapeur d'eau produite, formée dans la pile à combustible PEM, à un système de retrait de l'eau,
b) le système de retrait de l'eau comporte un séparateur (2) d'eau,
c) le séparateur d'eau dispose d'un dispositif de régulation, sous la forme d'une vanne (6) qui provoque la vidange automatique du séparateur (2) d'eau,
d) il est prévu du côté cathodique un dispositif (7) de régulation de la sortie d'eau ou de la sortie de vapeur d'eau de la pile à combustible.

2. Pile à combustible PEM suivant la revendication 1,
caractérisée en ce que
il est prévu un trou comme moyen d'envoi (5) de l'eau produite au séparateur (2) d'eau.

3. Pile à combustible PEM suivant la revendication 1 ou 2,
caractérisée en ce que
le dispositif de régulation pour la vanne donnant la vidange est une vanne (6) à flotteur.

4. Pile à combustible suivant l'une ou plusieurs des revendications précédentes,
caractérisée en ce que
le dispositif de régulation du courant de gaz qui sort du séparateur (2) d'eau est constitué d'une vanne (7) à pointeau.
